# EUROPEAN PATENT APPLICATION

(11) **EP 1 381 136 A1**
(43) Date of publication of application: **14.01.2004**
(21) Application number: 03015809.1
(22) Date of filing: 10.07.2003
(51) Int. Cl.: H02J 7/00

(54) **Battery-driven electronic equipment**

(30) Priority: 10.07.2002 JP 2002201810; 02.06.2003 JP 2003156905
(71) Applicant: MATSUSHITA ELECTRIC INDUSTRIAL CO., LTD., Kadoma-shi, Osaka 571-8501 (JP)
(72) Inventor: Kuranuki, Masaaki, Sakyo-ku, Kyoto-shi, Kyoto 606-8113 (JP); Bito, Yasuhiko, Minamikawachi-gun, Osaka 587-0032 (JP)
(74) Representative: Schorr, Frank, Dr.

(57) **Abstract**

Battery-driven electronic equipment (100) includes a battery (4), a first load (5) that is driven by the battery (4) and subjected to time division, a second load (6) that is driven by the battery (4), capable of being operated during an interval between periods in which the first load (5) is subjected to the time division, and a control portion (1) for controlling the first load (5) and the second load (6) so that a first driving period in which the first load (5) is driven by the battery (4) and a second driving period in which the second load (6) is driven by the battery (4) do not overlap each other. An oscillator (2) is provided for driving the first load (5). An inverter (3) is provided for driving the second load (6).

## Description

The present invention relates to industrial and consumer electronic equipment driven by a battery.

In recent years, along with the miniaturization and the enhancement of performance, there is a strong demand for smaller electronic equipment driven by a battery having a long driving time.

In order to prolong a driving time, various attempts have been made conventionally so as to increase the capacity of a battery. However, there is a limit to an increase in the capacity of a battery. For example, with a currently predominant lithium ion (Li―ion) secondary battery used for portable electronic equipment driven by a battery, the capacity is increased at most by about 10% per year according to Nikkei Electronics (2002.1.28, p. 51).

On the other hand, an attempt has been made to reduce the consumption of power (load current flowing from a battery) in portable electronic equipment driven by a battery. However, due to the enhancement of processing ability of electronic equipment, an increased size of a screen, an increase in an information amount to be processed, support for moving images, and the like, the power consumption is increased at a higher pace than that for attempting to reduce power consumption. Therefore, even considering the effects of an increase in battery capacity and a decrease in power consumption, the driving time of electronic equipment is not prolonged, and in fact may be shortened.

Under such a circumstance, in conventional battery-driven electronic equipment, a battery is required to supply a current required by a battery-driven load only when necessary. When the output voltage of a battery becomes less than a predetermined threshold voltage, electronic equipment stops operating, or requests exchange of a battery or charging.

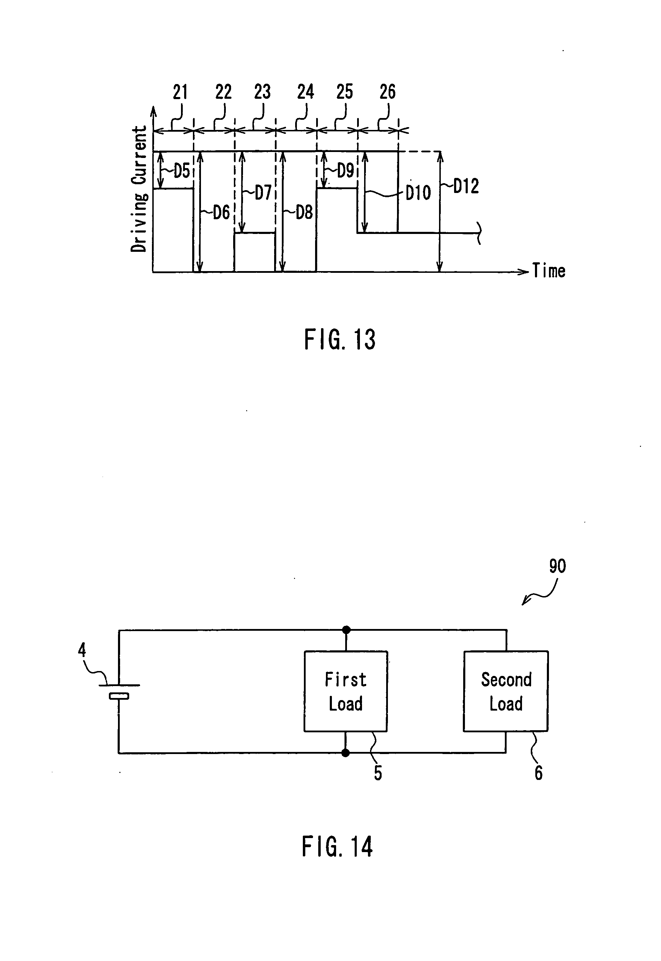

Hereinafter, conventional battery-driven electronic equipment will be described. FIG. 14 is a block diagram of conventional battery-driven electronic equipment 90. The battery-driven electronic equipment 90 is a mobile telephone, and includes a battery 4, and a first load 5 and a second load 6 connected in parallel to the battery 4. The first load 5 is composed of a power amplifier for sending radio waves in accordance with a time division multiplex system. The second load 6 is composed of a backlight for illuminating a liquid crystal display screen (not shown) provided in a mobile telephone. Although there are other examples of loads to be driven by the battery 4 in addition to a power amplifier and a backlight, a power amplifier and a backlight requiring a particularly large current among loads of a mobile telephone will be exemplified.

In a mobile telephone provided with a power amplifier for sending radio waves in accordance with a time division muliplex system, e.g., in a power amplifier complying with a Personal Digital Cellular (PDC) system, it is known that a current of about 500 milliamperes (mA) is allowed to flow from a lithium-ion (Li―ion) secondary battery of an average voltage of 3.7 V at a duty ratio of 1/3 during a period of 20 milliseconds to a power amplifier to send radio waves. Furthermore, in the power amplifier complying with a General Packet Radio Service (GPRS) system, it is known that a current of about 2 amperes (A) is allowed to flow from a lithium―ion (Li―ion) secondary battery of an average voltage of 3.7 V at a duty ratio of about 30% during a period of 5 milliseconds to a power amplifier to send radio waves. Thus, although this varies depending upon the system, it is required for the battery 4 to supply a pulse current at a frequency of about tens of heltz (Hz) to about hundreds of hertz (Hz) at a duty ratio of about 30% to the first load 5 constituting a power amplifier.

On the other hand, the current required for driving the second load 6 constituting a backlight for illuminating a liquid crystal display screen provided in a mobile telephone is about 200 milliamperes (mA) in a lithium-ion (Li―ion) secondary battery of an average voltage of 3.7 V in the example of the PDC system, although this varies depending upon the size of a liquid crystal display screen and the setting of a brightness.

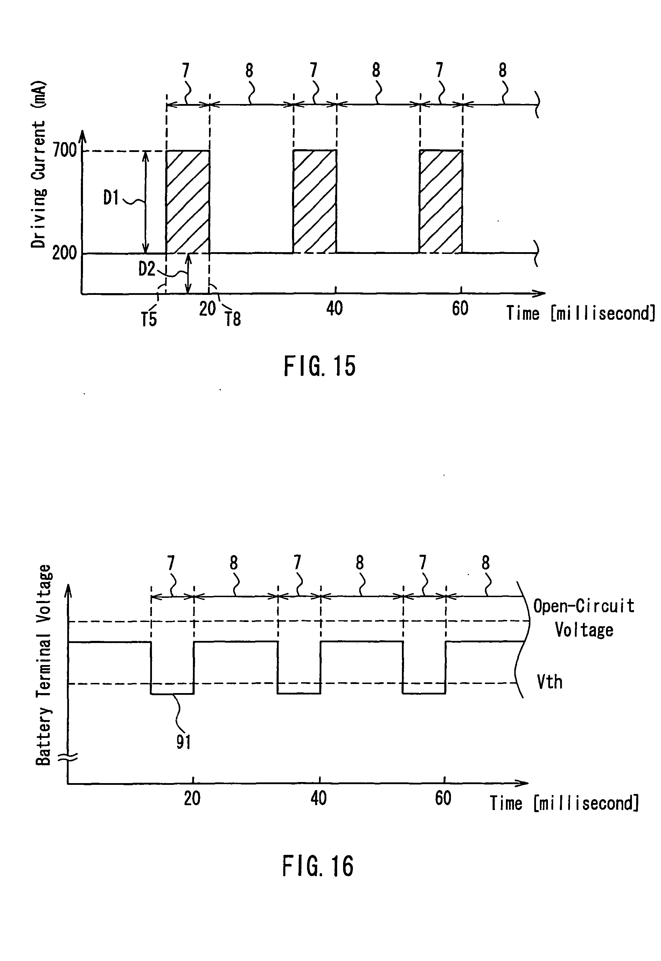

FIG. 15 is a waveform diagram of a driving current supplied to the first load 5 and the second load 6 provided in the conventional battery-driven electronic equipment 90. A horizontal axis represents a time (millisecond), and a vertical axis represents a driving current (milliampere) supplied from the battery 4 to the first load 5 and the second load 6. The battery 4 always supplies a driving current D2 to the second load 6 constituting a backlight for illuminating a liquid crystal display screen. The battery 4 supplies a driving current D1 to the first load 5 constituting a power amplifier for sending radio waves in accordance with the time division multiplex system at a duty ratio of 1/3 during a period of 20 milliseconds. In FIG. 15, a region representing the driving current D1 supplied to the first load 5 constituting a power amplifier is indicated by a shaded portion, and a region representing the driving current D2 supplied to the second load 6 constituting a backlight is indicated by a non-shaded portion. A driving period 7 in which the battery 4 supplies both the driving currents D1 and D2 and a driving period 8 in which the battery 4 supplies only the driving current D2 are placed alternately. The driving current supplied by the battery 4 during the driving period 7 corresponds to the sum of the driving currents D1 and D2, so that its peak becomes high.

FIG. 16 is a waveform diagram of a terminal voltage of the battery 4 provided in the conventional battery-driven electronic equipment 90. A horizontal axis represents a time (millisecond), and a vertical axis represents a terminal voltage of the battery 4. The terminal voltage of the battery 4 is a value obtained by subtracting the product of the driving current supplied by the battery 4 and the internal resistance of the battery 4 from the open-circuit voltage of the battery 4. Therefore, as the driving current of the battery 4 is larger, the terminal voltage of the battery 4 is decreased. Thus, during the driving period 7 in which the peak of a driving current becomes high, the terminal voltage of the battery 4 may be decreased to become lower than a minimum working voltage Vₜₕ of the battery-driven electronic equipment 90.

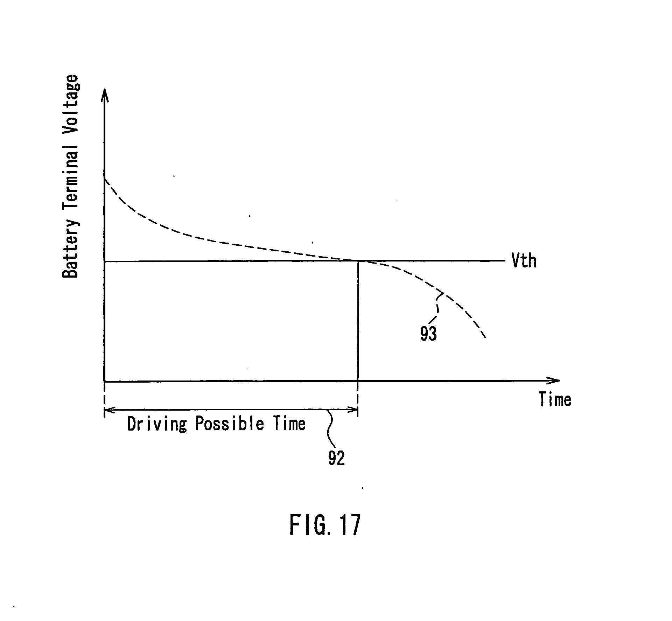

FIG. 17 is a graph showing discharge characteristics of the battery 4 provided in the conventional battery-driven electronic equipment 90. A horizontal axis represents a time, and a vertical axis represents a terminal voltage of the battery 4. The remaining amount of the battery 4 provided in a mobile telephone is considered to be none at a time when the terminal voltage 93 of the battery 4 becomes lower than the minimum working voltage Vₜₕ. Therefore, the driving possible time 92 of the battery 4 is completed at that time, and thereafter, it is necessary to exchange or charge the battery 4.

However, in the conventional configuration, the second load 6 constituting a backlight and the first load 5 constituting a power amplifier are driven during the driving period 7, so that a current peak becomes high. Therefore, before the battery 4 is used up completely, the terminal voltage of the battery 4 may be decreased to be lower than the minimum working voltage Vₜₕ. As a result, before the battery 4 is used up completely, the remaining amount of the battery 4 is considered to be none, and the driving possible time of the battery 4 is limited.

Particularly, in the case of performing data communication, a mobile telephone is used while a liquid crystal display screen is being watched. Therefore, compared with the case of performing voice communication, a backlight is likely to continue to light up by the operation of a keyboard provided in a mobile telephone. Therefore, a driving possible time, the time before the terminal voltage of the battery 4 is decreased to be lower than the minimum working voltage Vₜₕ, becomes short.

JP 2001-94662 A discloses a method for solving the above-mentioned problem. FIG. 18 is a block diagram of another conventional battery-driven electronic equipment 80. The battery-driven electronic equipment 80 includes an input apparatus 87, an output apparatus 84, a backlight function portion 82 for illuminating the input apparatus 87 and the output apparatus 84 from behind, a driving current control portion 83 for controlling a driving current supplied to the backlight function portion 82, a radio communication function portion 89 for performing radio communication processing, an information processing portion 85 for controlling each component provided in the battery-driven electronic equipment 80, a battery 86 for generating a voltage for operating the battery-driven electronic equipment 80, and a power source portion 88 for stabilizing a voltage generated by the battery 86 and distributing the stabilized voltage as a supply voltage 87 to each component of the battery-driven electronic equipment 80.

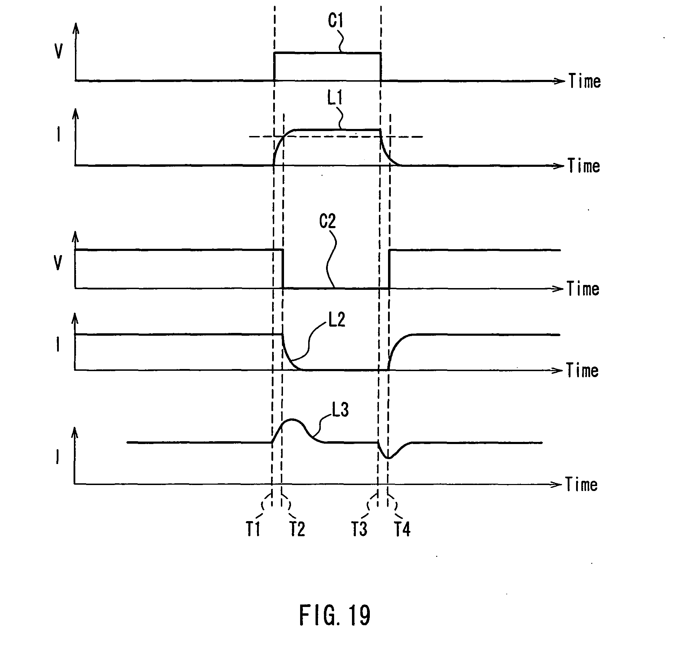

The operation of the battery-driven electronic equipment 80 thus configured will be described. FIG. 19 is a waveform diagram illustrating the operation of the battery-driven electronic equipment 80. When a data communication load control signal C1 rises to HIGH from LOW at a time T1 so as to turn on the function of the radio communication function portion 89, a driving current L1 for driving the radio communication function portion 89 starts increasing to exceed a predetermined threshold value at a time T2.

When the information processing portion 85 allows a backlight load control signal C2 to fall from HIGH to LOW so as to turn off the backlight function portion 82, the driving current control portion 83 starts decreasing the driving current L2 for driving the backlight function portion 82. Thereafter, the driving current L2 becomes zero.

Then, when the data communication load control signal C1 falls from HIGH to LOW at a time T3 so as to turn off the function of the radio communication function portion 89, the driving current L1 for driving the radio communication function portion 89 starts decreasing to be zero at a time T4.

When the information processing portion 85 allows the backlight load control signal C2 to rise from LOW to HIGH so as to turn on the backlight function portion 82 at the time T4 when the driving current L1 becomes zero, the driving current control portion 83 starts increasing the driving current L2 for driving the backlight function portion 82.

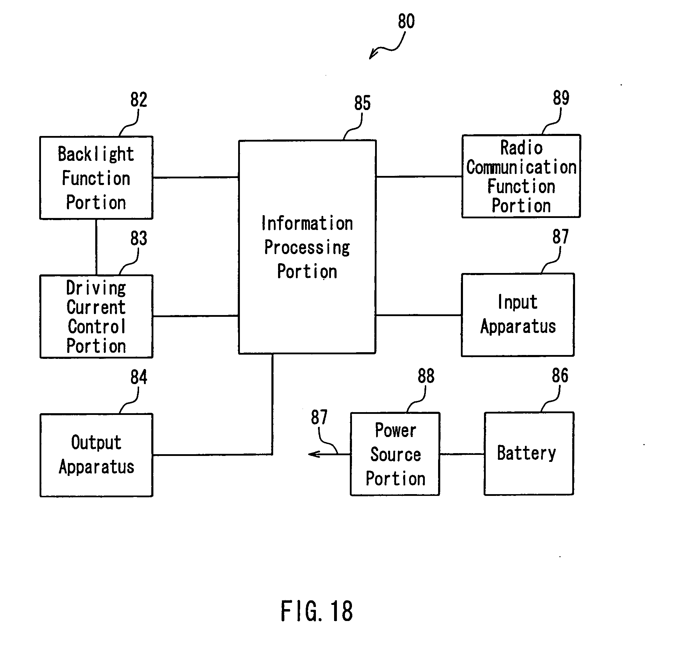

However, in the configuration of the prior art shown in FIGS. 18 and 19, at the time T2 when the driving current L1 for driving the radio communication function portion 89 exceeds a predetermined threshold value, the radio communication function portion 89 is determined to be operating, and the driving current L2 for driving the backlight function portion 82 is limited. Therefore, the timing for limiting the driving current L2 is delayed only by (T2-T1), and a total load current L3 obtained by adding the driving current L1 to the driving current L2 is pulsed as shown in FIG. 19.

Therefore, with the foregoing in mind, it is an object of the present invention to provide battery-driven electronic equipment capable of prolonging a driving time of a battery with a simple configuration.

Battery-driven electronic equipment according to the present invention includes: a battery; a first load that is driven by the battery and subjected to time division; a second load that is driven by the battery, capable of being operated during an interval between periods in which the first load is subjected to the time division; and a control portion for controlling the first load and the second load so that a first driving period in which the first load is driven by the battery and a second driving period in which the second load is driven by the battery do not overlap each other.

In the present specification, the first load to be subjected to time division refers to those in which a load to be driven is operated intermittently or a load is fluctuated with the passage of time (typically, in a periodical manner), such as a transmission power amplifier used for radio communication in accordance with the time division multiplex system, and an operation apparatus for performing interruption.

Battery-driven electronic equipment according to the present invention includes: a battery; a first load driven with a first driving current that is changed with the passage of time; a second load capable of being operated during a period excluding a period T in which the first driving current becomes maximum; and a control portion for controlling a load amount of the second load in accordance with a change in the first driving current with the passage of time so as to decrease a maximum value of a sum of the first driving current supplied from the battery for driving the first load and the second driving current supplied from the battery for driving the second load.

In the present specification, the load that is required to be subjected to a real-time operation and is capable of being subjected to time-division refers to those that should be completed for an operation within a predetermined time due to the internal or external constraint, standards, etc. of equipment. More specifically, the load refers to a transmission power amplifier in radio communication in accordance with the time division multiplex system, a signal processor for performing voice compression/expansion, etc., a vibrating motor for call alerts, a real time clock, and the like, having a fixed frequency and a fixed duty ratio or allowing a current to flow through a load for a predetermined time when an operation occurs.

These and other advantages of the present invention will become apparent to those skilled in the art upon reading and understanding the following detailed description with reference to the accompanying figures.
FIG. 1 is a block diagram of battery-driven electronic equipment according to Embodiment 1.
FIG. 2 is a waveform diagram of driving currents supplied to first and second loads provided in the battery-driven electronic equipment according to Embodiment 1.
FIG. 3 is a waveform diagram of a terminal voltage of a battery provided in the battery-driven electronic equipment according to Embodiment 1.
FIG. 4A is a waveform diagram illustrating a timing between the driving current supplied to the first load and the driving current supplied to the second load, provided in the battery-driven electronic equipment. FIG. 4B is a graph showing discharge characteristics of a battery provided in the battery-driven electronic equipment according to Embodiment 1.
FIG. 5 is a block diagram of another battery-driven electronic equipment according to Embodiment 1.
FIG. 6 is a waveform diagram illustrating a dead time provided between first and second driving periods in another battery-driven electronic equipment according to Embodiment 1.
FIG. 7 is a block diagram of a battery-driven electronic equipment according to Embodiment 2.
FIG. 8 is a view illustrating driving currents supplied to first and second loads provided in the battery-driven electronic equipment according to Embodiment 2.
FIG. 9 is a waveform diagram of the driving currents supplied to the first and second loads provided in the battery-driven electronic equipment according to Embodiment 2.
FIG. 10 is a waveform diagram of other driving currents supplied to the first and second loads provided in the battery-driven electronic equipment according to Embodiment 2.
FIG. 11 is a block diagram of battery-driven electronic equipment according to Embodiment 3.
FIG. 12 is a view illustrating driving currents supplied to first and second loads provided in the battery-driven electronic equipment according to Embodiment 3.
FIG. 13 is a waveform diagram of other driving currents supplied to the first and second loads provided in the battery-driven electronic equipment according to Embodiment 3.
FIG. 14 is a block diagram of conventional battery-driven electronic equipment.
FIG. 15 is a waveform diagram of driving currents supplied to the first and second loads provided in the conventional battery-driven electronic equipment.
FIG. 16 is a waveform diagram of a terminal voltage of a battery provided in the conventional battery-driven electronic equipment.
FIG. 17 is a graph showing discharge characteristics of a battery provided in the conventional battery-driven electronic equipment.
FIG. 18 is a block diagram of another conventional battery-driven electronic equipment.
FIG. 19 is a waveform diagram illustrating an operation of another conventional battery-driven electronic equipment.

In battery-driven electronic equipment according to the present embodiment, a first driving period in which the first load is driven by the battery does not overlap a second driving period in which the second load is driven by the battery. Therefore, it is possible to reduce changes with the passage of time in a sum of a first driving current supplied by the battery for driving the first load and a second driving current supplied by the battery for driving the second load.

Therefore, a time required for the terminal voltage of the battery to become lower than the lowest working voltage Vₜₕ increases. As a result, a driving period in which the battery-driven electronic equipment can be driven by the battery is prolonged.

It is preferable that the first load is required to be subjected to a real-time operation, and the second load is not required to be subjected to the real-time operation. According to this configuration, the driving period of a battery for driving a load required to be subjected to a real time operation can be prolonged.

It is preferable that the first load is a power amplifier for sending radio waves in accordance with a time division multiplex system. According to this configuration, the present invention is applicable to a mobile telephone provided with a power amplifier for sending radio waves in accordance with a time division multiplex system.

It is preferable that the first load has a fixed frequency and a fixed duty ratio for performing the time division. According to this configuration, since the frequency and the duty ratio for subjecting the first load to the time division are fixed, a first driving period for driving the first load can be shifted easily from the second driving period for driving the second load.

It is preferable that the first load is a CPU for scheduling a load. According to this configuration, the driving period of a battery can be prolonged while the CPU for scheduling a load is driven.

It is preferable that the second load is a backlight provided for illuminating a display screen. According to this configuration, the present invention is applicable to a mobile telephone provided with a liquid crystal screen for displaying information.

It is preferable that the control portion includes: an oscillator for generating a first control signal for ON/OFF control of the first load; and an inverter for inverting the first control signal generated by the oscillator so as to generate a second control signal for ON/OFF control of the second load. According to this configuration, the first and second loads can be controlled easily so that the first driving period and the second driving period do not overlap each other.

It is preferable that the control portion is composed of a large-scale integrated circuit (LSI).

It is preferable that the control portion includes a dead time setting unit for providing a dead time in accordance with a rise time and a fall time of first and second driving currents for driving the first and second loads at a shift time between the first driving period for driving the first load and the second driving period for driving the second load.

In another battery-driven electronic equipment according to the present invention, by controlling the load amount of the second load in accordance with a change in a first driving current with the passage of time, it is preferable that a sum of the first driving current supplied by a battery for driving the first load and a second driving current supplied by the battery for driving the second load becomes constant.

Because of this, the peak value at the sum of the first driving current and the second driving current can be decreased further. This enables the time required for the terminal voltage of a battery to become lower than the lowest working voltage Vₜₕ to be longer. Consequently, a driving period in which the battery-driven electronic equipment is driven by a battery can be prolonged.

Hereinafter, the present invention will be described by way of illustrative embodiments with reference to the drawings.

### Embodiment 1

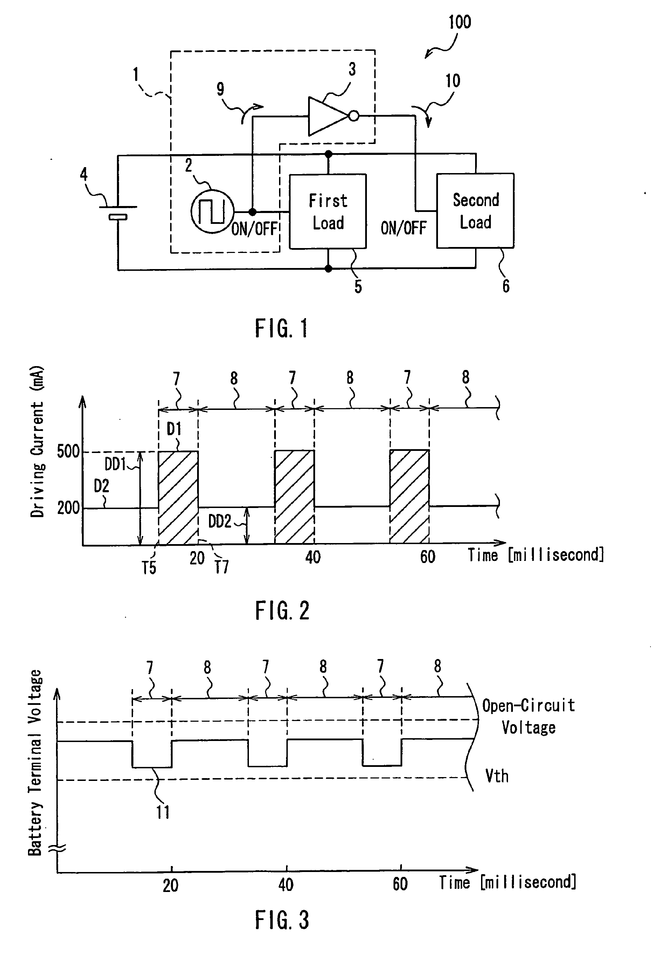

FIG. 1 is a block diagram of battery-driven electronic equipment 100 according to Embodiment 1. The battery-driven electronic equipment 100 may be a mobile telephone and includes a battery 4.

The battery-driven electronic equipment 100 includes a first load 5 and a second load 6 connected in parallel to the battery 4. The first load 5 may be composed of a power amplifier for sending radio waves in accordance with the time division multiplex system. Therefore, the first load 5 is subjected to time division at a predetermined frequency and duty ratio, and is required to be subjected to a real-time operation.

The second load 6 may be composed of a backlight for illuminating a liquid crystal display screen (not shown) provided in a mobile telephone. If the second load 6 flashes on and off at a frequency that cannot be perceived by the user, the second load 6 can be operated during an interval between periods in which the first load 5 is subjected to time division.

Although there are other examples of loads to be driven by the battery 4 in addition to a power amplifier and a backlight, a power amplifier and a backlight requiring a particularly large current among loads of a mobile telephone will be exemplified.

The battery-driven electronic equipment 100 includes a control portion 1. The control portion 1 has an oscillator 2. The oscillator 2 generates a control signal 9 for turning on/off the first load 5. The control portion 1 is provided with an inverter 3. The inverter 3 inverts the control signal 9 generated by the oscillator 2 so as to generate a control signal 10 for turning on/off the second load 6.

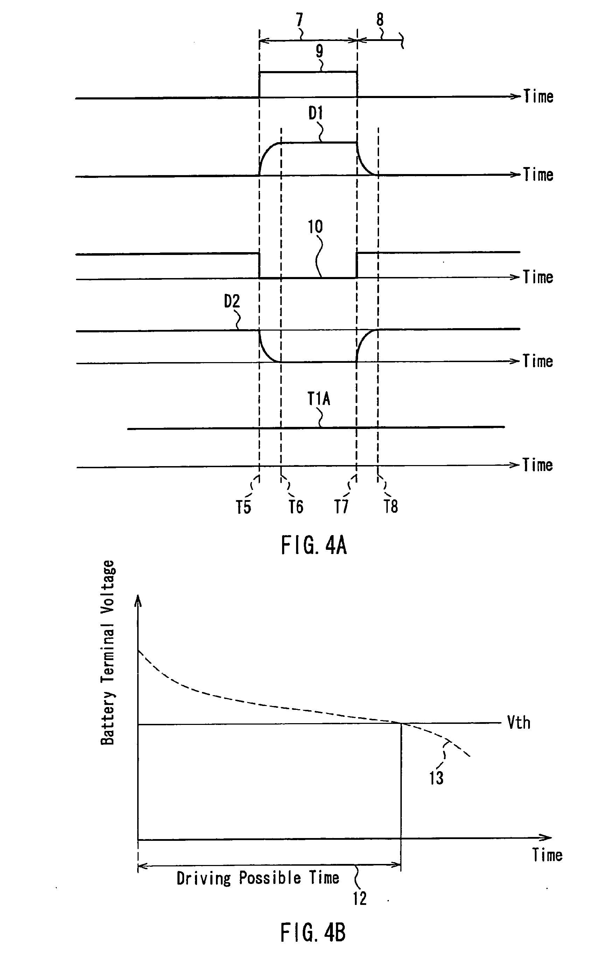

The operation of the battery-driven electronic equipment 100 thus configured will be described. FIG. 2 is a waveform diagram of driving currents supplied to the first load 5 and the second load 6 provided in the battery-driven electronic equipment 100. FIG. 3 is a waveform diagram of a terminal voltage of the battery 4. FIG. 4A is a waveform diagram illustrating a timing between the driving current supplied to the first load 5 and the driving current supplied to the second load 6. FIG. 4B is a graph showing discharge characteristics of the battery 4.

In FIG. 2, a region representing a current for driving the first load 5 constituting a power amplifier for transmission forming the first load 5 is indicated by a shaded portion, and a region representing a current for driving a second load 6 constituting a backlight for illuminating a liquid crystal display screen is indicated by a non-shaded portion.

The backlight is dimmable without perceptible flashing by the control of an ON time, as long as the frequency is tens of Hz to hundreds of Hz or more. For example, JP 08(1996)-107678 A describes that flashing in the neighborhood of 10 Hz from a frequency at which one screen is displayed is avoided for the purpose of suppressing flickering of the screen.

First, the oscillator 2 generates a control signal 9 for turning on the first load 5 during a first driving period 7 from a time T5 to a time T7. While the control signal 9 for turning on the first load 5 is generated by the oscillator 2, the first load 5 is turned on, and a driving current D1 that starts increasing at the time T5 to reach a predetermined value (500 mA, for example) at a time T6 is supplied from the battery 4 to the first load 5.

The inverter 3 inverts the control signal 9 generated by the oscillator 2 to generate a control signal 10 for turning off the second load 6 during the first driving period 7 from the time T5 to a time T7. When the control signal 10 for turning off the second load 6 is generated by the inverter 3, a driving current D2 for driving the second load 6 starts decreasing from 200 mA, for example, at the time T5 to reach zero at the time T6. Consequently, the second load 6 is turned off. Therefore, the driving current is not supplied from the battery 4 to the second load 6.

Then, during a second driving period 8 continued from the first driving period 7, the oscillator 2 generates the control signal 9 for turning off the first load 5 from the time T7. The driving current D 1 starts decreasing at the time T7 to reach zero at a time T8. Consequently, the first load 5 is turned off. Therefore, the driving current is not supplied from the battery 4 to the first load 5.

The inverter 3 inverts the control signal 9 generated by the oscillator 2 for turning off the first load 5 to generate a control signal 10 for turning on the second load 6 from the time T7. When the control signal 10 for turning on the second load 6 is generated by the inverter 3, the driving current D2 starts increasing at the time T7 to reach a predetermined value at the time T8. Consequently, the second load 6 is turned on, and the driving current D2 is supplied from the battery 4 to the second load 6.

The configuration in which the first load and the second load are turned on/off by hardware has been described. However, the present invention is not limited thereto. The same effect can be obtained even when the operations of the control portion including those of the oscillator and the inverter are performed by software.

Thus, during the first driving period 7, the first load 5 is driven with the driving current D1 supplied from the battery 4, and during the second driving period 8, the second load 6 is driven with the driving current D2 supplied from the battery 4. Therefore, the peak value of the driving current during the first driving period 7 becomes DD1, which is lower than the peak value (D1 + D2) of the driving current in the conventional configuration described above with reference to FIG. 15.

Furthermore, the driving current D1 and the driving current D2 are generated substantially simultaneously at the time T5. Therefore, as described above with reference to FIG. 19 in the prior art, a timing for limiting the driving current D2 for driving the second load 6 is not delayed. Consequently, as shown in FIG. 4A, a total load current T1A obtained by adding the driving current D 1 to the driving current D2 is not pulsed.

A lithium-ion (Li―ion) secondary battery generally forms a battery pack under the condition that a PTC (positive temperature coefficient) thermistor and a SU (safe unit) are connected in series as a protection circuit. The terminal voltage of the battery becomes a voltage obtained by subtracting, from an open-circuit voltage, a voltage drop caused by a driving current flowing at a resistance (hereinafter, referred to as an "internal resistance") corresponding to the sum of a resistance of circuit components, a resistance of wiring, and a connection resistance of a terminal in addition to a resistance of a unit cell.

Consequently, as shown in FIG. 3, the voltage drop of the battery becomes smaller than that shown in FIG. 16 described above in the prior art. Therefore, a driving possible time 12 of the battery before a battery terminal voltage 13 becomes less than a lowest working voltage Vₜₕ becomes longer than a driving possible period 92 shown in FIG. 17 described above in the prior art, as shown in FIG. 4B. Thus, the driving time of battery-driven electronic equipment can be prolonged without varying the kind and configuration of the battery.

During the first driving period 7, the second load 6 constituting a backlight is not driven. Therefore, the power consumed by the backlight becomes 2/3 of the power consumed in the conventional configuration. During the first driving period 7 in which radio waves are transmitted, a liquid crystal display screen seems to become slightly darker to human eyes; however, a decrease in brightness may be compensated for by increasing the driving current supplied to the second load 2 during the second driving period 8 in which the backlight illuminates the liquid crystal display screen so as to compensate for slight darkness, if required. Since the frequency at which the backlight flashes is tens of Hz to hundreds of Hz, flashing is not perceived. Thus, there is no practical problem even if the driving current supplied to the second load during the second driving period 8 is not increased. Furthermore, in the case of data communication, a key operation time often is longer than a transmission time of radio waves. Therefore, the brightness decrease is of such a degree as not to be recognizable.

As described above, according to Embodiment 1, the control portion 1 controls the first load 5 and the second load 6 in such a manner that the first driving period 7 in which the first load 5 is driven by the battery 4 and the second driving period 8 in which the second load 6 is driven by the battery 4 do not overlap each other. Therefore, a change with the passage of time in a driving current, which is the sum of the first driving current D1 supplied by the battery 4 for driving the first load 5 and the second driving current D2 supplied by the battery 4 for driving the second load 6, can be leveled.

Thus, as described above with reference to FIG. 19 in the prior art, a timing for limiting the driving current D2 for driving the second load 6 is not delayed. Consequently, as shown in FIG. 4A, the total load current T1A obtained by adding the driving current D 1 to the driving current D2 is not pulsed.

The example has been described in which the first load 5 is composed of a power amplifier for sending radio waves in accordance with the time division multiplex system and the second load 6 is composed of a backlight for illuminating a liquid crystal display screen. However, the present invention is not limited thereto. The first load 5 may be a load that can be subjected to time division and is required to be subjected to a real-time operation, and the second load 6 may be a load that can be operated during an interval between periods in which the first load 5 is subjected to time division.

Furthermore, the example has been described in which the battery 5 is a lithium-ion secondary battery. However, any battery that has discharge characteristics in which a terminal voltage decreases with the passage of time can enjoy the benefits of the present invention.

Furthermore, the example has been described in which two kinds of loads are operated alternately. However, it is appreciated that the same effects are obtained by processing three or more kinds of loads so that they do not overlap each other in terms of time. Furthermore, by selecting two loads (preferably, those which have a large load current) among three or more kinds of loads and operating them alternately, a peak current can be suppressed effectively with a simple configuration.

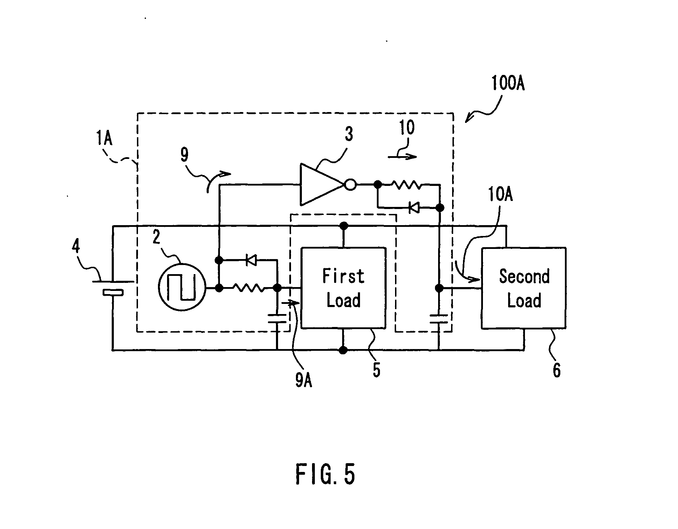

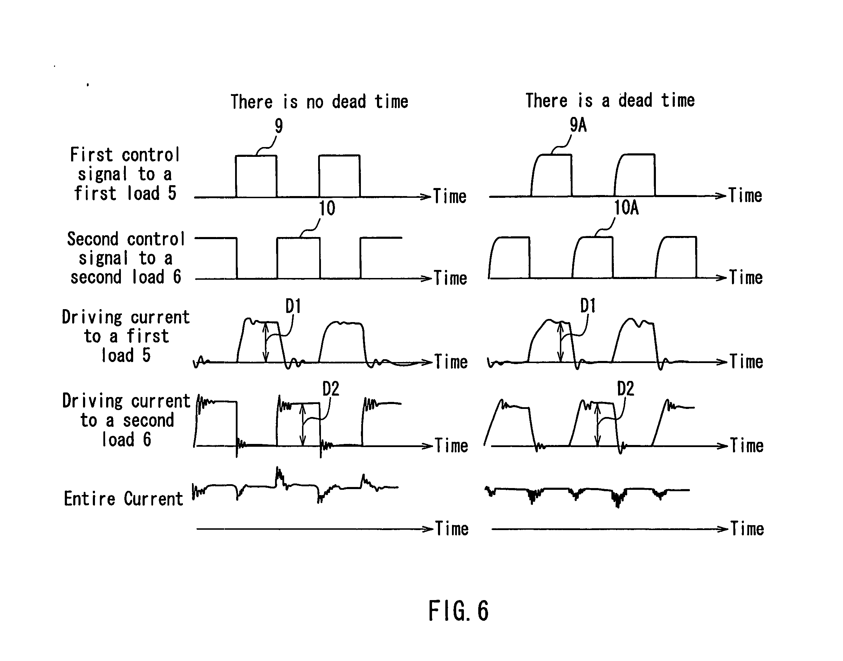

FIG. 5 is a block diagram of another battery-driven electronic equipment 100A according to Embodiment 1. FIG. 6 is a waveform diagram illustrating a dead time provided during a first driving period and a second driving period in the battery-driven electronic equipment 100A. The same components as those of the battery-driven electronic equipment 100 described above with reference to FIG. 1 are denoted with the same reference numerals as those therein. Therefore, the detailed description of these components will be omitted. The battery-driven electronic equipment 100A is different from the above-mentioned battery-driven electronic equipment 100 in that a control portion 1A is provided instead of the control portion 1.

In the control portion 1A, there is a delay circuit in which a resistor and a diode are connected in parallel between an oscillator 2 and a first load 5, and a capacitor is provided between ends of the resistor and the diode on the first load 5 side and a negative electrode of a battery 4. In the control portion 1A, there also is a delay circuit in which a resistor and a diode are provided in parallel between an inverter 3 and a second load 6, and a capacitor is provided between ends of the resistor and the diode on the second load 6 side and a negative electrode of the battery 4.

The operation of the battery-driven electronic equipment 100A thus configured will be described. First, the oscillator 2 generates a control signal 9 for turning on the first load 5 during a first driving period 7. While the control signal 9 for turning on the first load 5 is generated by the oscillator 2, the first load 5 is turned on, and a driving current D 1 is supplied from the battery 4 to the first load 5.

The control signal 9 generated by the oscillator 2 is allowed to pass through a CR delay circuit to generate a control signal 9A delayed from the control signal 9 for controlling the ON state of the first load 5, and a control signal 10A of the second load 6 for delaying the ON state of the second load 6 is generated based on the control signal 10 generated for controlling the second load 6 generated by the inverter 3.

When the time constants of the respective delay circuits generating the control signals 9A and 10A are set so that the peak value of a change in a transient current caused before and after a largest current period of a current flowing from the battery 4 does not exceed the maximum current greatly, considering a time during which the driving currents for driving the first load 5 and the second load 6 are changed transiently, the effect of the present embodiment can be exhibited remarkably.

Desirably when the time constants of the respective delay circuits are set so that the peak value of a change in a transient current does not exceed a current in a flat portion during the maximum current period, the effect of providing the delay circuits can be exhibited to the fullest extent.

For the above reason, a dead time (period in which any of the loads are not turned on transiently) is provided respectively at a leading end of the first driving period 7 and a leading end of the second driving period 8. The control signal 9 A rises gently compared with the control signal 9. Therefore, the driving current D1 supplied to the first load 5 may rise gently during a dead time period, or may rise delayed by a delay time determined by the CR delay circuit. Therefore, a peak occurring transiently during the maximum current period of the driving current when the first driving period is shifted to the second driving period can be prevented.

Thus, a dead time is provided respectively at a leading end of the first driving period and a leading end of the second driving period for the purpose of preventing a peak of a driving current from occurring when the first driving period is shifted to the second driving period. Therefore, at a shift timing between the loads that are operated alternately, a peak can be prevented from occurring transiently in a driving current, in the case where a change in a load current occurring transiently is delayed from the control signal with respect to the respective loads to cause overlapping of load currents. Thus, a voltage drop involved in a transient peak occurring in a driving current can be suppressed, so that the driving time of battery-driven equipment can be prolonged.

### Embodiment 2

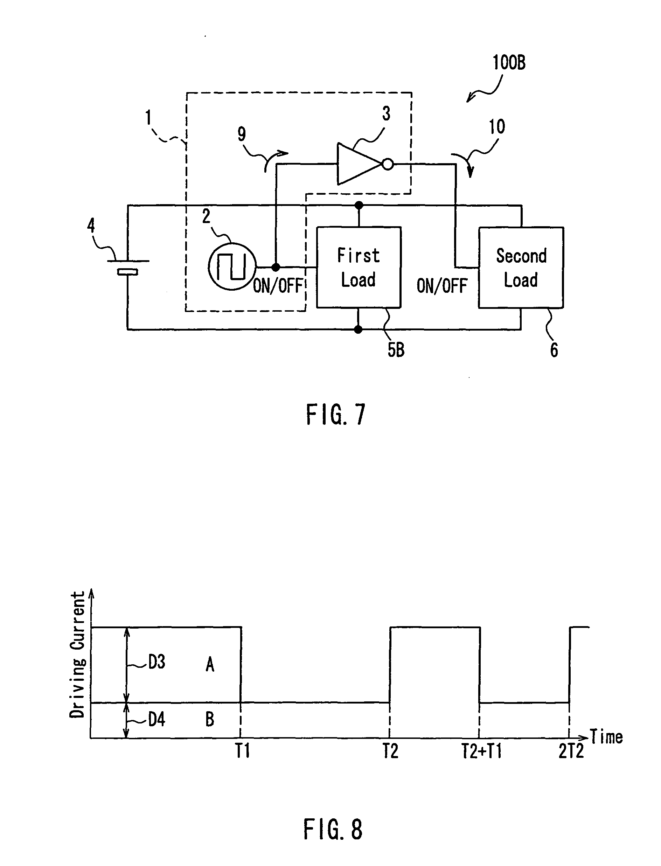

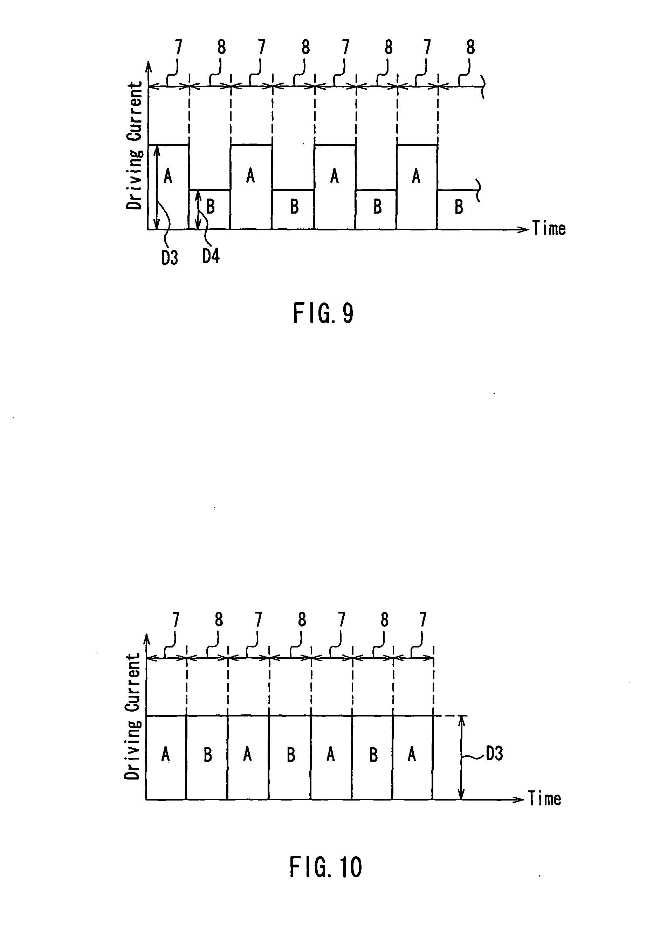

FIG. 7 is a block diagram of battery-driven electronic equipment 100B according to Embodiment 2. FIG. 8 is a view illustrating driving currents supplied to first and second loads according to a comparative example. FIG. 9 is a waveform diagram of driving currents supplied to first and second loads according to Embodiment 2. The same components as those of the battery-driven electronic equipment 100 according to Embodiment 1 described above with reference to FIG. 1 are denoted with the same reference numerals as those therein. Therefore, the detailed description thereof will be omitted here. The battery-driven electronic equipment 100B is different from the above-mentioned battery-driven electronic equipment 100 in that a first load 5B is provided instead of the first load 5. The first load 5B is composed of a CPU that can be subjected to time division.

Referring to FIG. 8, the first load 5B constituting the CPU is driven with a driving current D3 from a battery 4 during a period from time zero to a time T1. A second load 6 constituting a backlight is driven with a driving current D4 from the battery 4 during a period from time zero to a time T2 (after the time T1). Thus, the battery 4 supplies both the driving currents D3 and D4 during a period from time zero to the time T1. Herein, T1/T2 representing the ratio of a time occupied by the first load 5B with respect to the entire period is defined as a duty ratio.

Referring to FIG. 9, in Embodiment 2, time division is performed at a duty ratio of 50% by interrupting the processing of the CPU at a frequency of tens of Hz to hundreds of Hz, and the backlight is turned off during this period, thereby preventing a first driving period 7 in which the battery 4 drives the first load 5B and a second driving period 8 in which the battery 4 drives the second load 6 from overlapping each other. The first driving period 7 and the second driving period 8 are placed alternately. During the first driving period 7, the battery 4 supplies a driving current D3 to the first load 5B. During the second driving period 8, the battery 4 supplies the driving current D4 to the second load 6.

Thus, the driving current supplied by the battery 4 is leveled compared with the driving current shown in FIG. 8. This enables a peak of a driving current to be decreased easily.

FIG. 10 is a waveform diagram of other driving currents supplied to the first and second loads provided in the battery-driven electronic equipment 100B according to Embodiment 2. The results obtained by performing the above processing with reference to FIG. 9 are as follows: in order to compensate for a decrease in brightness of a liquid crystal display screen by providing a period in which the backlight is turned off, a current flowing through the backlight during the second driving period 8 is increased as shown in FIG. 10, whereby a decrease in brightness can be suppressed.

The example has been described in which the first load 5B is composed of a CPU, and the second load 6 is composed of a backlight for illuminating a liquid crystal display screen. However, the present invention is not limited thereto. The first load 5B may be a load that can be subjected to time division, and the second load 6 may be a load that can be operated during an interval between periods in which the first load 5B is subjected to time division.

In the case where the driving current D3 for driving the first load 5B is equal to the driving current D4 for driving the second load 6, when the first load 5B and the second load 6 are driven simultaneously as shown in FIG. 8, the peak value of the driving current becomes twice the value of the driving current D3. As shown in FIGS. 9 and 10, when the second load 6 is operated during an interval between periods in which the first load 5B is subjected to time division so that the driving period in which the first load 5B is driven and the driving period in which the second load 6 is driven do not overlap each other, the peak value of the driving current becomes the value of the driving current D3. Thus, the peak value of the driving current can be set to be a half to decrease the drop of a terminal voltage due to the driving current by a half.

When the ratio between the driving current D3 for driving the first load 5B and the driving current D4 for driving the second load 6 is 20 : 1, the driving current that can be reduced by operating the second load 6 during an interval between periods in which the first load 5B is subjected to time division becomes about 5%. Thus, when the ratio between the driving current D3 for driving the first load 5B and the driving current D4 for driving the second load 6 is larger than 20 : 1, the driving current that can be reduced becomes smaller than about 5%.

It is preferable that the ratio between the driving current D3 for driving the first load 5B and the driving current D4 for driving the second load 6 is 1 to 20. It is most preferable that the ratio between the driving current D3 for driving the first load 5B and the driving current D4 for driving the second load 6 is 1.

Furthermore, the description has been made under the condition that the load of the CPU has a duty ratio of 50%. However, this duty ratio may be changed if required.

### Embodiment 3

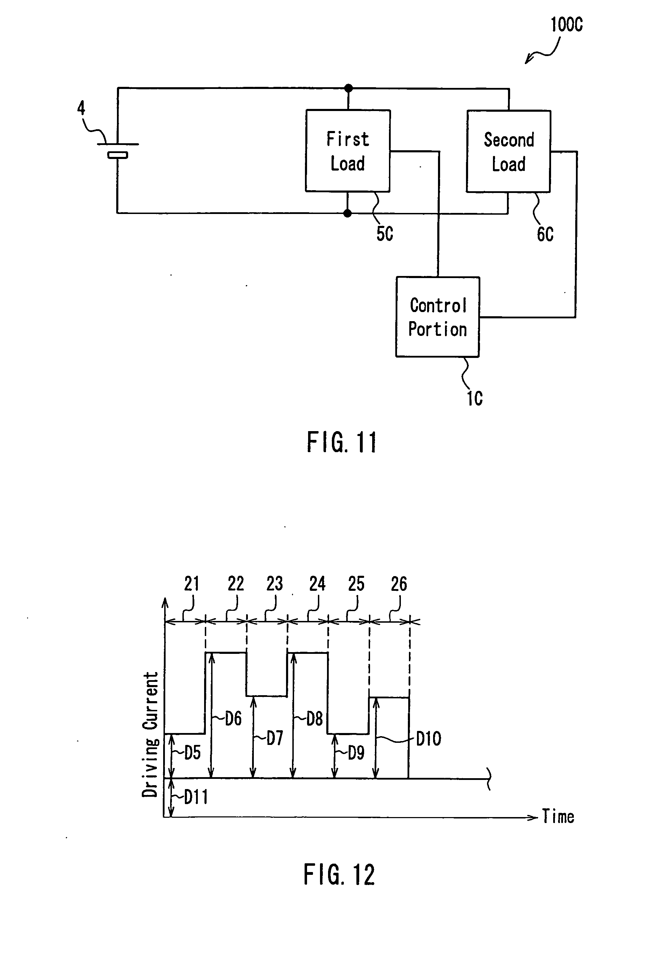

FIG. 11 is a block diagram of battery-driven electronic equipment 100C according to Embodiment 3. FIG. 12 is a view illustrating driving currents supplied to first and second loads according to a comparative example. FIG. 13 is a waveform diagram of driving currents supplied to first and second loads provided in the battery-driven electronic equipment 100C according to Embodiment 3. The same components as those of the battery-driven electronic equipment 100 described with reference to FIG. 1 are denoted with the same reference numerals as those therein. Thus, the detailed description thereof will be omitted here.

The battery-driven electronic equipment 100C includes a battery 4. A first load 5C and a second load 6C are connected in parallel to the battery 4. The first load 5C needs to be subjected to a real-time operation so that the load amount is changed with the passage of time. The second load 6C is not required always to be driven, and can be operated during an interval between periods in which the first load 5C is subjected to time division.

Referring to FIG. 12, the first load 5C is driven with a driving current D5 supplied from the battery 4 during a startup period 21, is driven with a driving current D6 supplied from the battery 4 during a driving period 22, is driven with a driving current D7 supplied from the battery 4 during a driving period 23, is driven with a driving current D8 during a driving period 24, is driven with a driving current D9 during a driving period 25, and is driven with a driving current D10 during a driving period 26. Thus, it is understood that the load amount of the first load 5C changes with the passage of time, and there are periods 22 and 24 in which a maximum driving current is generated.

Referring to FIG. 13, in Embodiment 3, the load amount of the second load 6C is controlled in accordance with a change in a driving current for driving the first load 5C with the passage of time so that the sum of the driving currents supplied from the battery 4 to the first load 5C and the second load 6C becomes a predetermined value. In the example shown in FIG. 13, the load amount of the second load 6C during the driving period 21 is controlled so that the driving current for driving the second load 6C and the driving current D5 for driving the first load 5C becomes a predetermined value D12. During the driving period 23, the load amount of the second load 6C is controlled so that the sum of the driving current for driving the second load 6C and the driving current D7 for driving the first load 5C becomes the predetermined value D12. During the driving period 25, the load amount of the second load 6C is controlled so that the sum of the driving current for driving the second load 6C and the driving current D9 for driving the first load 5C becomes the predetermined value D12. During the driving period 26, the load amount of the second load 6C is controlled so that the sum of the driving current for driving the second load 6C and the driving current D10 for driving the first load 5C becomes the predetermined value D12. During the driving periods 22 and 24, the driving current D6 for driving the first load 5C and the driving current D8 for driving the first load 5C are equal to the predetermined value D12, so that the second load 6C is controlled so as to be turned off.

Thus, by controlling the load amount of the second load 6C in accordance with the driving current for driving the first load 5C so that the sum of the driving currents from the battery 4 becomes a predetermined value, the peak of the driving current is suppressed, and a voltage drop of the battery is minimized. Consequently, the effect of the present invention can be exhibited in the most desirable form.

As described above, according to Embodiment 3, there are provided the battery 4, the first load 5C driven with the driving currents D5 to D10 that change with the passage of time, the second load 6C that can be operated during the periods 21, 23, 25, and 26 excluding the periods 22 and 24 in which the driving current becomes maximum, and the control portion 1C for controlling the load amount of the second load 6C in accordance with a change in the driving currents D5 to D10 with the passage of time so as to decrease the maximum value of the sum of the driving currents D5 to D10 supplied from the battery 4 for driving the first load 5C and the driving current D11 supplied from the battery 4 for driving the second load 6C.

The control portion 1C sends a signal to each load by setting an appropriate dead time, thereby preventing overlapping of load currents. The dead time may be set by hardware or software. When the dead time is set, the peak value of the driving current can be lowered. Thus, a time required for the terminal voltage of the battery becomes lower than the lowest working voltage Vₜₕ becomes longer. Consequently, a driving period during which the battery-driven electronic equipment is driven by a battery can be prolonged.

It is preferable that the control portions 1, 1A, 1B, and 1C described above in Embodiments 1 to 3 comprise a large-scale integrated circuit (LSI).

In Embodiments 1 to 3, two kinds of loads have been exemplified. However, even in the case where there are a plurality of first loads and a plurality of second loads, by stopping the driving of the second loads while a current is flowing through the first loads with a control signal having an appropriate dead time, or by limiting the driving current, the maximum value of a current supplied from a battery to complicated electronic equipment can be reduced, and the effect of the present invention can be exhibited.

As described above, according to the present invention, battery-driven electronic equipment can be provided, in which the driving period of a battery can be prolonged without changing a battery material.

Summarized, the invention provides battery-driven electronic equipment including a battery, a first load that is driven by the battery and subjected to time division, a second load that is driven by the battery, capable of being operated during an interval between periods in which the first load is subjected to the time division, and a control portion for controlling the first load and the second load so that a first driving period in which the first load is driven by the battery and a second driving period in which the second load is driven by the battery do not overlap each other.

## Claims

1. Battery-driven electronic equipment, comprising:
a battery (4);
a first load (5) that is driven by the battery (4) and subjected to time division;
a second load (6) that is driven by the battery (4), capable of being operated during an interval between periods in which the first load (5) is subjected to the time division; and
a control portion (83) for controlling the first load (5) and the second load (6) so that a first driving period (7) in which the first load (5) is driven by the battery (4) and a second driving period (8) in which the second load (6) is driven by the battery (4) do not overlap each other.

2. The battery-driven electronic equipment according to claim 1, wherein the first load (5) is required to be subjected to a real-time operation, and the second load (6) is not required to be subjected to the real-time operation.

3. The battery-driven electronic equipment according to claim 1 or 2, wherein the first load (5) is a power amplifier for sending radio waves in accordance with a time division multiplex system.

4. The battery-driven electronic equipment according to one of claims 1 to 3, wherein the first load (5) has a fixed frequency and a fixed duty ratio for performing the time division.

5. The battery-driven electronic equipment according to one of claims 1 to 4, wherein the first load (5) is a CPU for scheduling a load.

6. The battery-driven electronic equipment according to one of claims 1 to 5, wherein the second load (6) is a backlight provided for illuminating a display screen.

7. The battery-driven electronic equipment according to one of claims 1 to 6, wherein the control portion (83) comprises:
an oscillator (2) for generating a first control signal for ON/OFF control of the first load (5); and
an inverter (3) for inverting the first control signal generated by the oscillator (2) so as to generate a second control signal for ON/OFF control of the second load (6).

8. Battery-driven electronic equipment, in particular in combination with the battery-driven electronic equipment according to one of claims 1 to 7, comprising:
a battery (4);
a first load (5) driven with a first driving current that is changed with a passage of time;
a second load (6) capable of being operated during a period excluding a period T in which the first driving current becomes maximum; and
a control portion (83) for controlling a load amount of the second load (6) in accordance with a change in the first driving current with the passage of time so as to decrease a maximum value of a sum of the first driving current supplied from the battery (4) for driving the first load (5) and a second driving current supplied from the battery (4) for driving the second load (6).

9. The battery-driven electronic equipment according to one of claims 1 to 8, wherein the control portion (83) comprises a large-scale integrated circuit (LSI).

10. The battery-driven electronic equipment according to one of claims 1 to 9, wherein the control portion (83) includes a dead time setting unit for providing a dead time in accordance with a rise time and a fall time of first and second driving currents for driving the first and second loads (5,6) at a shift time between the first driving period (7) for driving the first load (5) and the second driving period (8) for driving the second load (6).

11. A large-scale integrated circuit (LSI) for controlling a first load (5) that is driven by a battery (4) and subjected to time division and a second load (6) that is driven by the battery (4), capable of being operated during an interval between periods in which the first load (5) is subjected to the time division, the LSI comprising:
an oscillator (2) for generating a first control signal for ON/OFF control of the first load (5); and an inverter (3) for inverting the first control signal generated by the oscillator (2) so as to generate a second control signal for ON/OFF control of the second load (6),
wherein the LSI controls the first load (5) and the second load (6) so that a first driving period in which the first load (5) is driven by the battery (4) and a second driving period in which the second load (6) is driven by the battery (4) do not overlap each other.
